# EUROPEAN PATENT SPECIFICATION

(11) **EP 1 331 119 B1**
(45) Date of publication and mention of the grant of the patent: **12.11.2008**
(21) Application number: 02075505.4
(22) Date of filing: 25.01.2002
(51) Int. Cl.: B60J 7/043

(54) **Vehicle with sliding and venting sunroof**
Fahrzeug mit Hebeschiebedach
Véhicule avec toit levant et coulissant

(43) Date of publication of application: 30.07.2003
(73) Proprietor: Inalfa Roof Systems Group B.V., 5804 AH Venray (NL)
(72) Inventor: Manders, Peter Christiaan Leonardus Johannes, 5961 SM Horst (NL); Boersma, Egbert, 5708 CR Helmond (NL)
(74) Representative: Metman, Karel Johannes

(56) References cited:
- EP-A- 0 403 388
- EP-A- 1 052 126
- DE-C- 4 238 945

## Description

The present invention relates to a vehicle having an roof assembly in accordance with the preamble of claim 1.

Such an roof assembly is known, for example from DE-C-42 38 944, DE-C-42 38 945, WO-A-98/14342 or WO-A-00/29235.

The object of the present invention is to provide a new roof assembly of the kind referred to in the introduction.

In order to accomplish that objective, the roof assembly according to the invention is characterized by the features defined in the characterizing portion of claim 1.

Due to the features of the invention, there is created a separate venting position which is independent from the rearward movement of the closure element to an open position.

The advantage is that the maximum venting position can be chosen at will without being bound by a successive rearward movement. Also, in the independent rearward movement, the height of the closure panel can be optimized without having to take into account the venting position of the closure element.

Furthermore, there is no need for a lifting lever, creating a simple, stable and reliable structure allowing a low built-in height of the lifting device.

Preferably, the guide curve connected to the stationary part is substantially V-shaped in side view, said lifting control element of the driving slide being positioned at the bottom of the V-shape when the closure element is in the closed position. In this case each leg of the V-shape determines the vertical movement of the panel, one to the venting position and one to the rearwardly displaced open position.

In one embodiment, the guiding device includes a guide cam fixed to the closure element, whereas in an alternative embodiment, the guiding device includes a carriage rotatably connected to the closure element and having at least one and preferably two guide members which are in engagement with the rear longitudinal guide track.

In both embodiments it is preferred that the rear longitudinal guide track includes a front portion which is curved downwardly.

In this manner the guiding device can be used for lifting the rear of the closure element when it is moved to an open position.

The invention will hereafter be explained in more detail with reference to the drawings, showing in a very simple form the principles of an embodiment of the roof assembly according to the invention.

Fig. 1a - 1f are longitudinal sectional views of the vehicle roof showing the roof assembly in different positions.

Fig. 2 is a perspective exploded view of the front longitudinal guide track and rear longitudinal guide track and the parts guided therein.

Fig. 3 is a view similar to that of Fig. 2, but showing the parts from the other side.

Fig. 4a and 4b are a perspective view showing the assembly of parts of Fig. 2 with and without a side bracket.

Fig. 5a and 5b are views corresponding to Fig. 4 but viewed from the side of Fig. 3.

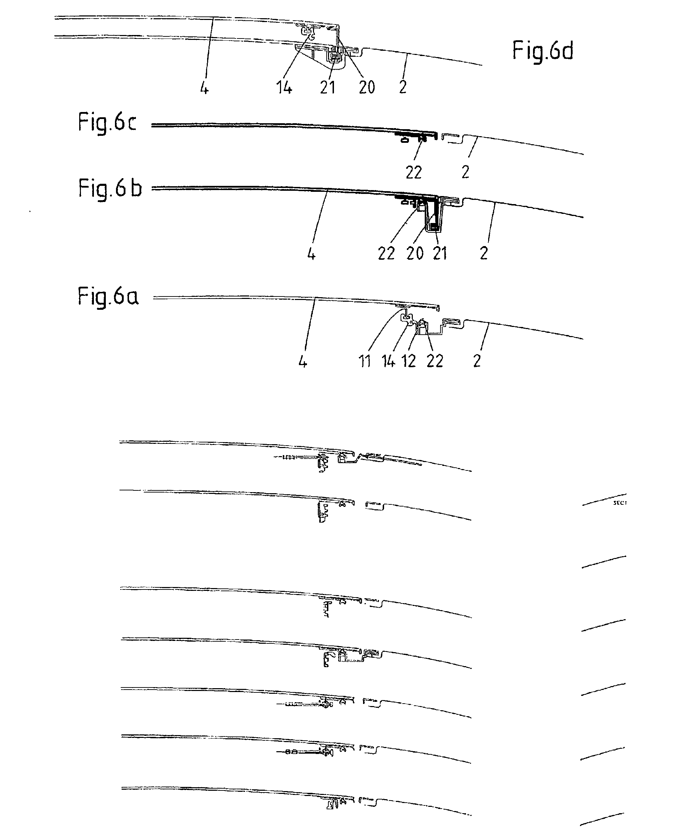

Fig. 6a - 6d are sectional views along the lines VIa-VIa to VId-VId in Fig. 1.

Fig. 7a - 7e are views corresponding to those of Fig. 1a - 1f but showing an alternative embodiment of the roof assembly.

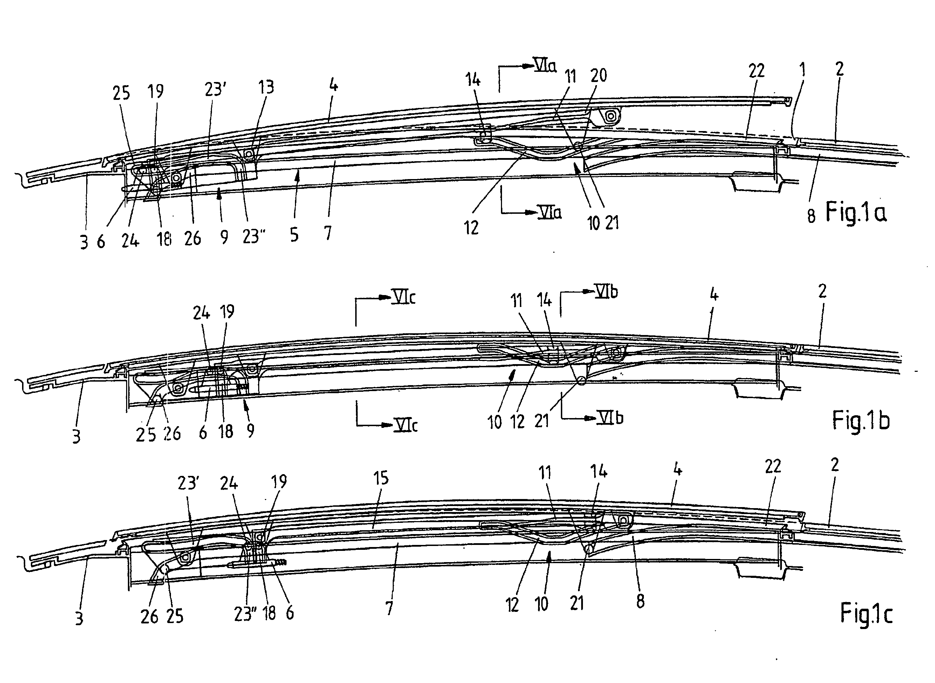

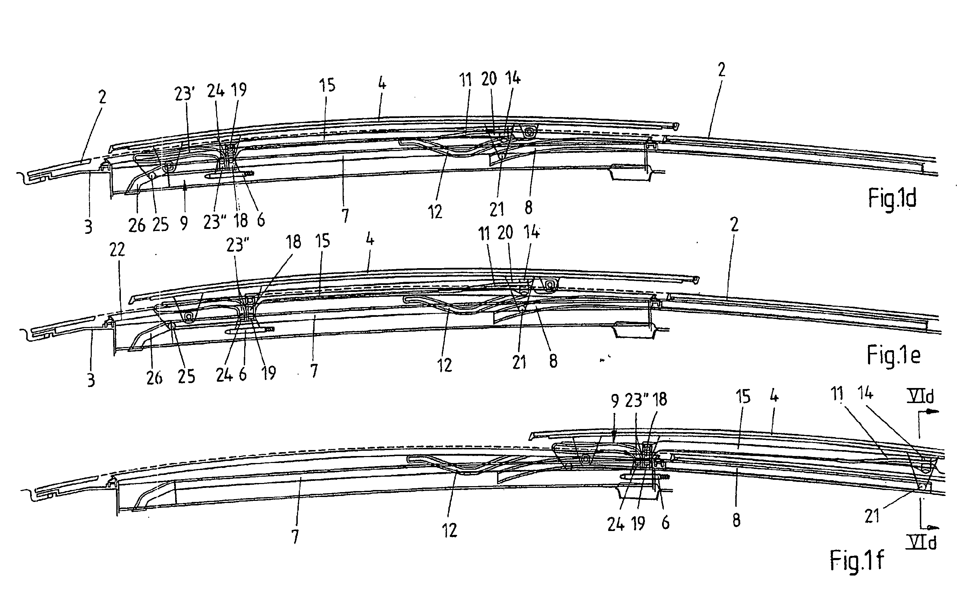

The drawings show an embodiment of a roof assembly for a vehicle, in particular a motor vehicle such as a passenger car. As is shown in Fig. 1, this vehicle is provided with an opening 1 in its fixed roof 2, whereby it is noted that said fixed roof 2 may either form part of the vehicle or of the roof assembly itself, which in that case makes up the entire roof of the vehicle. The fixed roof 2 may consist of an integral part of the vehicle or of one or more (transparent) panels, which may be removable or form a separate adjustable roof element.

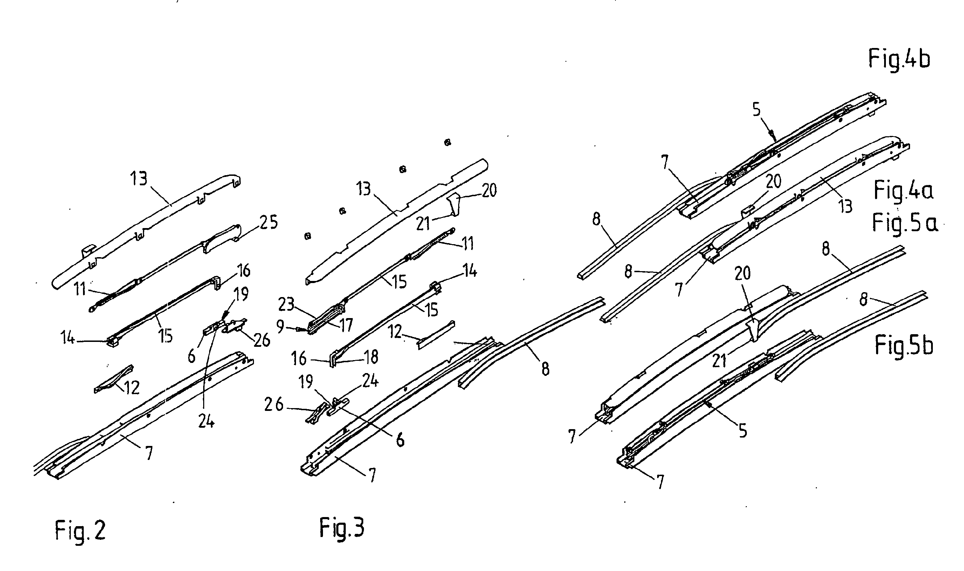

The roof assembly comprises a stationary part, such as a frame 3, and a closure element, in this case in the form of a rigid and preferably transparent panel 4, for example made of glass or of plastic material, which is movably supported by frame 3. In this embodiment, panel 4 is movable between a closed position, in which roof opening 1 is closed and panel 4 is at least substantially coplanar with the fixed roof 2 (Fig. 2b) and a venting position in which the panel 4 is rearwardly inclined (Fig. 1a). Furthermore, the panel 4 is movable between said closed position and an open position, in which panel 4 occupies a rearward position, at least partially above fixed roof 2, in which a very large part of opening 2 is cleared (Fig. 1f).

An adjusting mechanism 5 is provided on each longitudinal side of panel 4 for effecting the movements of panel 4. The mechanism 5 is driven by a driving slide 6 coupled to a driving element, such as a driving cable and a manual actuator, such as a crank, or a motor such as an electric motor, for driving the cable. The mechanism 5 supports panel 4 and is at least partially guided in a front longitudinal guide track, which forms part of or is mounted on frame 3. The front longitudinal guide track 7 extends along each side edge of roof opening 1, at a lower level than fixed roof 2. Furthermore, a rear longitudinal guide track 8 is provided on each longitudinal side of the roof assembly, that is at the fixed roof, mainly rearward of the roof opening 1 and, in this case, at a lower level than the fixed roof 2.

The panel includes a front support 9 and a lifting device 10 positioned rearwardly thereof. They are both in engagement with the driving slide 6 which is guided in the front longitudinal guide track 7.

As is shown in Fig. 1 and 2, the lifting device 10 includes two guide curves 11 and 12, one (11) connected to a side bracket 13 of the panel, and one (12) fixed to the stationary part, i.e. the front longitudinal guide track 7. It further includes a lifting control element 14 which is continuously in engagement with guide curve 11 and also with guide curve 12 when the lifting device is in operation. Guide curve 11 slightly runs upwardly closer to the panel in rearward direction. Guide curve 12 has substantially a V-shape, wherein the lifting control element is at the bottom of the V-shape when the panel is in its closed position (Fig. 2b, lifting control element not shown). The front leg of the V-shaped guide curve 12 mainly determines the lifting characteristics when the panel 4 is moved to the venting position, and the rear leg mainly determines the start of the rearward movement of the panel 4.

The guide curve 11 is connected to the front support 10 and the lifting control element 14 has a forward extension 15 carrying a transverse pin 16 engaging in a straight slot 17 in the front support 9, so as to guide sliding movements of the lifting control element 14 and its extension with respect to the panel 4. At the extension 15, on the other side of the pin 16, there is created a slot 18 substantially perpendicular to the front longitudinal guide track 7. In this slot 18 engages a pin 19 of the driving slide 6, so as to drive the lifting control element in the direction of the front longitudinal guide track 7, but allow free (limited) movement of the lifting control element 14 (and the panel 4) perpendicular thereto.

The lifting device 10 further includes a guiding device, here in the form of a rear slider 20 fixed to the panel 4, for example through the side bracket 13. The rear slider 20 has a transverse guide cam 21 which is adapted to engage the slot of the rear longitudinal guide track from one side. The rear slider is laterally offset from the lifting device 10 and is arranged outwardly of a seal 22 which seals the panel 4 when it is in the closed position. The rear longitudinal guide track 8 also extends outwardly of this seal 22. The front longitudinal guide track extends inwardly thereof. In the closed and venting positions of the panel 4, the guide cam of the rear slider 20 is disengaged from the rear longitudinal guide track, and becomes engaged when the panel 4 is moved rearwardly from the closed position.

The front support 9 is connected to the driving slide 6 through a pin-slot connection including a slot 23 in the front support 9 and a second transverse pin 24 on the driving slide 6. Slot 23 has a front portion 23' that is substantially parallel to the front longitudinal guide track 7 but is slightly curved to cause a slight vertical movement of the front side of the panel 4 when the pin 24 runs through the slot portion 23'. The rear portion 23" of slot 23 is substantially perpendicular to the front longitudinal guide track 7 so that the driving slide 6 has a direct driving relation when pin 24 is positioned in slot portion 23".

The front support 9 is guided in the front longitudinal guide track 7 by means of a slide shoe 25 which is slidably engaged in a lateral slot of the front longitudinal guide track. The front longitudinal guide track 7 includes a front portion 26 sloping downwardly succesively at two different angles to the front longitudinal guide track 7. The slide shoe 25 of front support 9 is in engagement with said front portion 26 when the panel 4 is in its front positions, either closed or in the venting position.

The operation of the roof assembly will be explained with reference to fig. 1a - 1f.

In fig. 1b, the panel 4 is in its closed position. In this position, the control lifting element is at the bottom of the V-shaped guide curve 12. The guide cam 21 of the rear slider 20 is in front of the open front end of the rear longitudinal guide track 8. The slide shoe 25 of the front support 9 is in the front portion 26 of the front longitudinal guide track 7. The pin 19 on the driving slide 6 is at the transition of both portions 23' and 23" of the slot 23 in the front support 9.

When the driving slide 6 is moved forwardly in the front longitudinal guide track 7, the panel 4 is tilted to its inclined venting position as the lifting control element 14 has lifted the rear side of the panel 4 due to its travel along the relevant leg of the V-shaped guide curve 12 and along the downwardly sloping part of the guide curve 13. The pin 19 on the driving slide 6 has travelled through the slightly curved slot portion 23' and has therefore kept the front edge of the panel flush with the fixed roof 2.

When, starting from the closed position of Fig. 1b, the driving slide 6 is moved rearwardly in the front longitudinal guide track 7, the panel 4 is moved to the position of Fig. 1c. The lifting control element 14 travels along the other leg of the V-shaped guide curve 12 moving the rear side of the panel 4 upwardly again but to a smaller extent, also due to the shape of the panel guide curve 11. The guide cam 21 of the rear slider 20 has started to enter the rear longitudinal guide track 8 and the pin 19 of the driving slide has started to enter the vertical slot portion 23" of the front support. The slide shoe 25 of the slightly moving front support 9 has left the most sloping front portion 26 of the front longitudinal guide track 7 and the front edge of panel 4 has been moved upwardly.

In the following position of Fig. 1d, the guide cam 21 of the rear slider 20 has fully entered the rear longitudinal guide track 8, and the lifting control element 14 has left the guide curve 12. The lifting control element 14 has arrived at its end position of the sliding movement with respect to the panel 4. As the pin 19 of the driving slide 6 has entered the vertical slot portion 23" the driving slide now directly drives the panel 4 in its sliding movement.

When the driving slide 6 is moved further, the panel 4 is moved further back. The guide cam 21 of the rear slider 20 has taken over the support of the panel 4. It moves through the inclined front portion of the rear longitudinal guide track 8 and as a result, the rear side of the panel 4 is moved rearwardly and upwardly. The front side of the panel 4 also moves rearwardly and upwardly as the slide shoe travels through the sloping portion of the front longitudinal guide track 7.

In Fig. 1e, the driving slide 6 has moved further back and the slide shoe 25 has now left the sloping front portion of the front longitudinal guide track 7. Pins 19 and 24 of the diving slide 6 can freely move in the vertical slots 18 and 23 of the lifting control element 14 and the front support 9 to allow vertical movements of the panel 4 without interfering with the driving operation of the driving slide 6.

In Fig. 1f, the panel 4 has reached its fully open position in which a great part of the roof opening 1 has been cleared.

The return movement of the panel 4 to the front, closed position will be effected in an opposite manner.

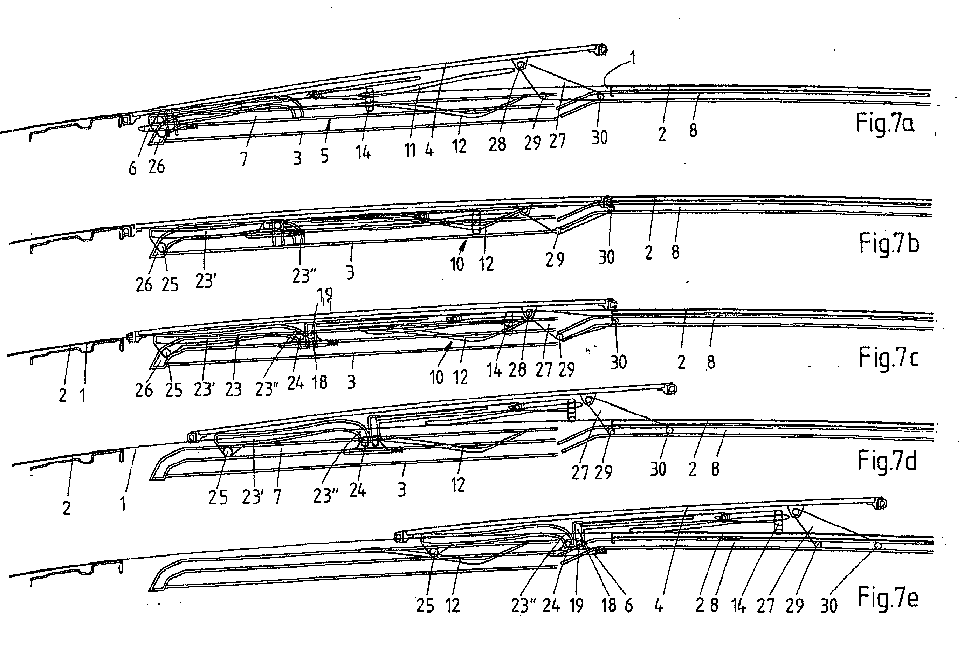

In Fig. 7 there is shown an alternative embodiment of the roof assembly. The main difference with the first embodiment is that the guiding device of the lifting device 10 is now constructed as a carriage 27 being pivotally connected to the panel through pivot 28 and having two slide shoes 29 and 30 adapted to slide through the rear longitudinal guide track 8. As is shown in the drawings, the rear slide shoe 30 always remains in the straight portion of the rear longitudinal guide track 8, whereas the front slide shoe 29 travels through the inclined front portion and exits the rear longitudinal guide track 8 when the panel is in the front positions, i.e. closed and venting positions. During the sliding movement of the panel 4, the upward movement of the rear side of the panel is determined first by the rear portion of the guide curve 12 and then mainly by the tilting movement of the carriage 27 around the rear slide shoe 30.

From the foregoing it will be clear that the invention provides a very simple, yet robust, stable, reliable and low profile support and actuating mechanism for the closure element. The mechanism has a relatively small number of parts. The design is versatile and the roof panel can be combined with other panels.

The invention is not restricted to the exemplary embodiment as described above and shown in the drawing, which can be varied in several ways without departing from the scope of the claims. For example, it is possible that in the second embodiment both slide shoes exit the rear longitudinal guide track in the front positions of the closure element and enter the guide track when the closure element is moved rearwardly. The guiding device performs both a support and lifting function in all embodiments shown and described above.

## Claims

1. Vehicle having an roof assembly for opening an opening (1) in its fixed roof (2), comprising a stationary part (3) attached to the vehicle roof and at least one closure element (4) which is movably supported by said stationary part and which can be adjusted by means of an adjusting mechanism (5) including a driving slide (6), wherein said closure element is movable between a closed position for closing the roof opening, and an open, rearward position for being at least partially above the roof area behind the roof opening, in which the roof opening is at least partially released, wherein said stationary part (3) is fitted with at least one front longitudinal guide track (7) extending at least along the roof opening (1), whereas a rear longitudinal guide track (8) is mounted at least substantially rearward of the roof opening, the closure element (4) being supported near its front side by a front support (9) which is movably guided by said front longitudinal guide track (7), and which is supported rearwards thereof by a lifting device (10) comprising a guiding device (20, 21; 27) for engagement in said rear longitudinal guide track (8) upon rearward movement of the closure element (4), **characterized in that** the lifting device (10) is adapted to tilt the closure element (4) from the closed position in the roof opening (1) to an upwardly inclined venting position on the one hand and to move the closure element (4) from the closed position rearwardly on the other hand, wherein the lifting device (10) includes two guide curves, one (11) connected to the closure element (4) and one (12) connected to the stationary part (3), the lifting control element (14) of the driving slide (6) being in engagement with both guide curves (11, 12) when in operation and being adjustable in vertical direction.

2. Vehicle according to claim 1, wherein the guide curve (12) connected to the stationary part (3) is substantially V-shaped in side view, said lifting control element (14) of the driving slide (6) being positioned at the bottom of the V-shape when the closure element (4) is in the closed position.

3. A vehicle according to one of the preceding claims, wherein the guiding device (20, 21; 28) is out of engagement with the rear longitudinal guide track (8) at least when the closure element (4) is in the venting position.

4. A vehicle according to claim 3, wherein the guiding device (20, 21; 27) comes in engagement with the rear longitudinal guide track (8) when the closure element (4) is moved rearwardly from the closed position, while said lifting control element (14) of the driving slide (6) then becomes disengaged from at least the guide curve (12) connected to the stationary part (3).

5. A vehicle according to any of the preceding claims, wherein the guiding device includes a rear slider (20) fixed to the closure element (4).

6. A vehicle according to any of claims 1 - 4, wherein the guiding device includes a carriage (27) rotatably connected to the closure element (4) and having at least one and preferably two slide shoes (29, 30) which are in engagement with the rear longitudinal guide track (8).

7. A vehicle according to claim 5 or 6, wherein the rear longitudinal guide track (8) includes a front portion which is sloping downwardly in forward direction.

8. A vehicle according to one of claims 5 - 7, wherein the rear longitudinal guide track (8) is laterally offset from the front longitudinal guide track (7) and extends outwardly of a seal (22) of the closure element (4).

9. A vehicle according to one of claims 5 - 8, wherein the lifting control element (14) is engaged with the driving slide (6) through a pin-slot connection (18, 19), wherein the slot (18) has at least a component perpendicular to the front longitudinal guide track (7).

10. A vehicle according to one of the preceding claims, wherein the driving slide (6) and the closure element (4) are engaged through a pin-slot connection (23, 24), of which the slot (23) has a first and second slot portion, the first slot portion (23') being substantially parallel to the front longitudinal guide track (7) and the second slot portion (23") being substantially perpendicular to the front longitudinal guide track (7), the pin 24) being in engagement with the second slot portion (23") when the closure element (4) is in rearwardly moved positions.

11. A vehicle according to claim 10, wherein the first slot portion (23') is slightly curved to cause the front of the closure panel (4) to move in vertical direction when the pin (24) runs through the slot (23).

12. A vehicle according to any of the preceding claims, wherein the front longitudinal guide track (7) has a front portion sloping downwardly at an angle to the front longitudinal guide track (7), the front support (9) being in engagement with said front portion when the closure element (4) is in its front positions.

13. A roof assembly for use in the vehicle according to one of the preceding claims.

## Patentansprüche

1. Fahrzeug mit einer Dachanordnung zum Öffnen einer Öffnung (1) in seinem feststehenden Dach (2), aufweisend ein ortsfestes Teil (4), das an dem Fahrzeugdach angebracht ist, und wenigstens ein Schließelement (4), welches am dem ortsfesten Teil bewegbar abgestützt ist und welches mittels eines Verstellmechanismus (5) mit einem Antriebsschlitten (6) verstellt werden kann, wobei das Schließelement zwischen einer Schließstellung zum Schließen der Dachöffnung und einer hinteren Öffnungsstellung wenigstens teilweise über dem Dachbereich hinter der Dachöffnung, in welcher die Dachöffnung wenigstens teilweise freigegeben ist, bewegbar ist, wobei das ortsfeste Teil (3) mit wenigstens einer vorderen Längsführungsschiene (7) ausgestattet ist, die sich wenigstens entlang der Dachöffnung (1) erstreckt, während eine hintere Längsführungsschiene (8) wenigstens im Wesentlichen hinter der Dachöffnung montiert ist, wobei das Schließelement (4) in der Nähe seiner vorderen Seite an einer vorderen Stütze (9) abgestützt ist, welche an der vorderen Längsführungsschiene (7) bewegbar geführt ist, und welches rückwärtig davon an einer Hubvorrichtung (10) abgestützt ist, die eine Führungsvorrichtung (20, 21; 27) für den Eingriff in die hintere Längsführungsschiene (8) bei der Rückwärtsbewegung des Schließelements (4) aufweist, **dadurch gekennzeichnet, dass** die Hubvorrichtung (10) geeignet ist, einerseits das Schließelement (4) aus der Schließstellung in der Dachöffnung (1) in eine nach oben geneigte Lüftungsstellung zu kippen und andererseits das Schließelement (4) aus der Schließstellung nach hinten zu bewegen, wobei die Hubvorrichtung (10) zwei Führungskurven aufweist, von denen eine (11) mit dem Schließelement (4) verbunden ist und eine (12) mit dem ortsfesten Teil (3) verbunden ist, wobei das Hubsteuerelement (14) des Antriebsschlittens (6) beim Betrieb in Eingriff mit beiden Führungskurven (11, 12) ist und in Vertikalrichtung verstellbar ist.

2. Fahrzeug nach Anspruch 1, wobei die Führungskurve (12), die mit dem ortsfesten Teil (3) verbunden ist, in der Seitenansicht im Wesentlichen V-förmig ist, wobei das Hubsteuerelement (14) des Antriebsschlittens (6) an der Unterseite der V-Form positioniert ist, wenn das Schließelement (4) in der Schließstellung ist.

3. Fahrzeug nach einem der vorhergehenden Ansprüche, wobei die Führungsvorrichtung (20, 21; 28) von der hinteren Längsführungsschiene (8) außer Eingriff ist, zumindest wenn das Schließelement (4) in der Lüftungsstellung ist.

4. Fahrzeug nach Anspruch 3, wobei die Führungsvorrichtung (20, 21; 27) mit der hinteren Längsführungsschiene (8) in Eingriff gelangt, wenn das Schließelement (4) aus der Schließstellung nach hinten bewegt wird, während das Hubsteuerelement (14) des Antriebsschlittens (6) dann von wenigstens der mit dem ortsfesten Teil (3) verbundenen Führungskurve (12) außer Eingriff gelangt.

5. Fahrzeug nach einem der vorhergehenden Ansprüche, wobei die Führungsvorrichtung einen hinteren Schlitten (20) aufweist, der an dem Schließelement (4) festgelegt ist.

6. Fahrzeug nach einem der Ansprüche 1 - 4, wobei die Führungsvorrichtung einen Träger (27) aufweist, der mit dem Schließelement (4) drehbar verbunden ist und wenigstens einen oder vorzugsweise zwei Gleitschuhe (29, 30) aufweist, welche mit der hinteren Längsführungsschiene (8) in Eingriff sind.

7. Fahrzeug nach Anspruch 5 oder 6, wobei die hintere Längsführungsschiene (8) einen vorderen Abschnitt aufweist, welcher sich in Vorwärtsrichtung nach unten neigt.

8. Fahrzeug nach einem der Ansprüche 5 - 7, wobei die hintere Längsführungsschiene (8) von der vorderen Längsführungsschiene (7) seitlich versetzt ist und sich außerhalb einer Dichtung (22) des Schließelements (4) erstreckt.

9. Fahrzeug nach einem der Ansprüche 5 - 8, wobei das Hubsteuerelement (14) über eine Bolzen-Schlitz-Verbindung (18, 19) mit dem Antriebsschlitten (69 im Eingriff ist, wobei der Schlitz (18) wenigstens eine Komponente senkrecht zu der vorderen Längsführungsschiene (7) aufweist.

10. Fahrzeug nach einem der vorhergehenden Ansprüche, wobei der Antriebsschlitten (6) und das Schließelement (4) über eine Bolzen-Schlitz-Verbindung (23, 24) in Eingriff sind, von welcher der Schlitz (23) einen ersten und zweiten Schlitzabschnitt aufweist, wobei der erste Schlitzabschnitt (23') im Wesentlichen parallel zu der vorderen Längsführungsschiene (7) ist und der zweite Schlitzabschnitt (23'') im Wesentlichen senkrecht zu der vorderen Längsführungsschiene (7) ist, wobei der Bolzen (24) mit dem zweiten Schlitzabschnitt (23") im Eingriff ist, wenn das Schließelement (4) in nach hinten bewegten Stellungen ist.

11. Fahrzeug nach Anspruch 10, wobei der erste Schlitzabschnitt (23') etwas gekrümmt ist, um zu bewirken, dass sich die Vorderseite des Schließpaneels (4) in Vertikalrichtung bewegt, wenn der Bolzen (24) durch den Schlitz (23) hindurch läuft.

12. Fahrzeug nach einem der vorhergehenden Ansprüche, wobei die vordere Längsführungsschiene (7) einen vorderen Abschnitt aufweist, der sich in einem Winkel zu der vorderen Längsführungsschiene (7) nach unten neigt, wobei die vordere Stütze (9) mit dem vorderen Abschnitt im Eingriff ist, wenn das Schließelement (4) in seinen vorderen Stellungen ist.

13. Dachanordnung für die Verwendung bei dem Fahrzeug nach einem der vorhergehenden Ansprüche.

## Revendications

1. Véhicule comportant un ensemble de toit pour ouvrir une ouverture (1) dans son toit fixe (2), comprenant une partie fixe (3) fixée au toit du véhicule et au moins un élément de fermeture (4) qui est supporté de manière mobile par ladite partie fixe et qui peut être ajusté au moyen d'un mécanisme d'ajustement (5) comprenant un coulisseau d'entraînement (6), dans lequel ledit élément de fermeture peut être déplacé entre une position fermée pour fermer l'ouverture de toit, et une position ouverte vers l'arrière pour être au moins partiellement au-dessus de la zone de toit derrière l'ouverture de toit, dans lequel l'ouverture de toit est au moins partiellement dégagée, dans lequel ladite partie fixe (3) est équipée d'au moins un rail de guidage longitudinal avant (7) s'étendant au moins le long de l'ouverture de toit (1), tandis qu'un rail de guidage longitudinal arrière (8) est monté au moins sensiblement à l'arrière de l'ouverture de toit, l'élément de fermeture (4) étant supporté à proximité de son côté avant par un support avant (9) qui est guidé de manière mobile par ledit rail de guidage longitudinal avant (7), et qui est supporté vers l'arrière de celui-ci par un dispositif d'élévation (10) comprenant un dispositif de guidage (20, 21 ; 27) destiné à être engagé dans ledit rail de guidage longitudinal arrière (8) lors d'un mouvement vers l'arrière de l'élément de fermeture (4), **caractérisé en ce que** le dispositif d'élévation (10) est adapté pour incliner l'élément de fermeture (4) de la position fermée dans l'ouverture de toit (1) vers une position d'aération inclinée vers le haut d'une part et pour déplacer l'élément de fermeture (4) de la position fermée vers l'arrière d'autre part, dans lequel le dispositif d'élévation (10) comprend deux glissières courbes de guidage, une (11) reliée à l'élément de fermeture (4) et une (12) reliée à la partie fixe (3), l'élément de commande d'élévation (14) du coulisseau d'entraînement (6) étant en prise avec les deux glissières courbes de guidage (11, 12) en fonctionnement et étant ajustable dans la direction verticale.

2. Véhicule selon la revendication 1, dans lequel la glissière courbe de guidage (12) reliée à la partie fixe (3) est sensiblement en forme de V en vue latérale, ledit élément de commande d'élévation (14) du coulisseau d'entraînement (6) étant positionné dans le fond de la forme en V lorsque l'élément de fermeture (4) est dans la position fermée.

3. Véhicule selon l'une des revendications précédentes, dans lequel le dispositif de guidage (20, 21 ; 28) n'est pas en prise avec le rail de guidage longitudinal arrière (8) au moins lorsque l'élément de fermeture (4) est dans la position d'aération.

4. Véhicule selon la revendication 3, dans lequel le dispositif de guidage (20, 21 ; 27) vient en prise avec le rail de guidage longitudinal arrière (8) lorsque l'élément de fermeture (4) est déplacé vers l'arrière à partir de la position fermée, tandis que ledit élément de commande d'élévation (14) du coulisseau d'entraînement (6) est alors séparé d'au moins la glissière courbe de guidage (12) reliée à la partie fixe (3).

5. Véhicule selon l'une quelconque des revendications précédentes, dans lequel le dispositif de guidage comprend un coulisseau arrière (20) fixé à l'élément de fermeture (4).

6. Véhicule selon l'une quelconque des revendications 1 à 4, dans lequel le dispositif de guidage comprend un chariot (27) relié en rotation à l'élément de fermeture (4) et comportant au moins un et de préférence deux patins de coulissement (29, 30) qui sont en prise avec le rail de guidage longitudinal arrière (8).

7. Véhicule selon la revendication 5 ou 6, dans lequel le rail de guidage longitudinal arrière (8) comprend une partie avant qui est inclinée vers le bas dans la direction avant.

8. Véhicule selon l'une des revendications 5 à 7, dans lequel le rail de guidage longitudinal arrière (8) est décalé latéralement par rapport au rail de guidage longitudinal avant (7) et s'étend vers l'extérieur d'un joint (22) de l'élément de fermeture (4).

9. Véhicule selon l'une des revendications 5 à 8, dans lequel l'élément de commande d'élévation (14) est en prise avec le coulisseau d'entraînement (6) par l'intermédiaire d'une liaison axe-fente (18, 19), dans lequel la fente (18) comporte au moins un composant perpendiculaire au rail de guidage longitudinal avant (7).

10. Véhicule selon l'une des revendications précédentes, dans lequel le coulisseau d'entraînement (6) et l'élément de fermeture (4) sont en prise par l'intermédiaire d'une liaison axe-fente (23, 24), dont la fente (23) comporte des première et deuxième parties de fente, la première partie de fente (23') étant sensiblement parallèle au rail de guidage longitudinal avant (7) et la deuxième partie de fente (23") étant sensiblement perpendiculaire au rail de guidage longitudinal avant (7), l'axe (24) étant en prise avec la deuxième partie de fente (23") lorsque l'élément de fermeture (4) est dans les positions déplacées vers l'arrière.

11. Véhicule selon la revendication 10, dans lequel la première partie de fente (23') est légèrement incurvée pour amener l'avant du panneau de fermeture (4) à se déplacer dans la direction verticale lorsque l'axe (24) parcourt la fente (23).

12. Véhicule selon l'une quelconque des revendications précédentes, dans lequel le rail de guidage longitudinal avant (7) comporte une partie avant inclinée vers le bas selon un angle par rapport au rail de guidage longitudinal avant (7), le support avant (9) étant en prise avec ladite partie avant lorsque l'élément de fermeture (4) est dans ses positions en avant.

13. Ensemble de toit destiné à être utilisé dans le véhicule selon l'une des revendications précédentes.
